# EUROPÄISCHE PATENTSCHRIFT

(11) **EP 3 007 915 B1**
(45) Veröffentlichungstag und Bekanntmachung des Hinweises auf die Patenterteilung: **30.08.2017**
(21) Anmeldenummer: 14714701.1
(22) Anmeldetag: 02.04.2014
(51) Int. Cl.: B60C 15/04, B29D 30/48, B29D 30/50

(54) **VERFAHREN ZUR HERSTELLUNG EINES FAHRZEUGLUFTREIFEN MIT EINER REDUZIERTEN BIEGESTEIFIGKEIT DES WULSTKERNES UND DES REIFENWULSTES**
METHOD FOR PRODUCING A PNEUMATIC VEHICLE TYRE HAVING A REDUCED FLEXURAL STIFFNESS OF THE BEAD CORE AND OF THE TYRE BEAD
PROCÉDÉ PERMETTANT DE PRODUIRE UN PNEUMATIQUE DE VÉHICULE DONT LA TRINGLE DU TALON ET LE TALON DU PNEUMATIQUE PRÉSENTENT UNE RIGIDITÉ À LA FLEXION RÉDUITE

(30) Priorität: 13.06.2013 DE 102013106150
(43) Veröffentlichungstag der Anmeldung: 20.04.2016
(73) Patentinhaber: Continental Reifen Deutschland GmbH, 30165 Hannover (DE)
(72) Erfinder: FRIES, Volkmar, 30900 Wedemark (DE); MAZUR, Heinz-Bernd, 30900 Wedemark (DE); KRAMER, Thomas, 32049 Herford (DE)
(74) Vertreter: Widjaja, Wira
(86) Internationale Anmeldenummer: PCT/EP2014/056562
(87) Internationale Veröffentlichungsnummer: WO 2014/198436

(56) Entgegenhaltungen:
- WO-A1-2008/046430
- DE-A1- 4 233 802
- GB-A- 2 064 442
- JP-A- 2004 123 020
- US-A- 2 000 869
- US-A- 2 181 475
- US-A- 3 949 800
- US-A1- 2005 109 441

## Beschreibung

Die Erfindung betrifft ein Verfahren zur Herstellung eines Fahrzeugluftreifen mit einer reduzierten Biegesteifigkeit des Wulstkernes und des Reifenwulstes.

Bei Fahrzeugluftreifen hat der Wulstkern die Aufgabe, einen stabilen Sitz des Reifens auf der Felge sicherzustellen. Für diesen Zweck muss der Wulstkern eine hohe Umfangssteifigkeit und eine hohe Torsionssteifigkeit besitzen. Der Wulstkern darf jedoch nicht zu biegesteif sein, um eine ausreichende Montierbarkeit und Demontierbarkeit des Reifens in Verbindung mit der Reifenfelge zu ermöglichen. Bei der Montage des Fahrzeugreifens wird der im Umfang kreisrunde Wulstkern elliptisch verformt, um den Reifenwulst über das Felgenhorn zu bringen. Bei herkömmlichen Fahrzeugreifen werden Wulstkerne aus endlos gespulten und gummierten Stahldraht eingesetzt, die eine hohe Umfangs- und Torsionssteifigkeit aufweisen. Ein Problem ist jedoch, dass die Biegesteifigkeit des Wulstkernes ebenfalls sehr hoch ist, so dass bei der Montage und Demontage des Reifens auf die Felge Beschädigungen am Reifenwulst auftreten können.

Die Anmeldeschriften US 2005/0109441 A1 und WO 2008/046430 A1 offenbaren weitere Verfahren zur Herstellung von Fahrzeugreifen. Der Erfindung liegt die Aufgabe zu Grunde, ein Verfahren zur Herstellung eines Fahrzeugluftreifen zu schaffen, bei dem die Biegesteifigkeit des Reifenwulstes im Hinblick auf die Montage und Demontage des Fahrzeugreifens verbessert wird.

Gelöst wird die Aufgabe gemäß dem Verfahren nach Anspruchs 1 mit folgenden Schritten:
a) Vorkonfektionierung eines Wulstkernes mit einem Stahlcorddraht,
   wobei der Stahlcorddraht eine äußere Gummierung ohne ein Vulkanisationsmittel oder einem Vernetzungssystem für die Gummierung aufweist und
   wobei der Stahlcorddraht in mehreren Windungen in Umfangsrichtung des Wulstkernes aufgewickelt wird,
b) Applizierung eines Kernprofiles am Wulstkern,
   wobei das Kernprofil auf der äußeren Seite des Wulstkernes in Umfangsrichtung angeordnet wird,
c) Applizierung eines Reifenwulstbauteils mit einer erhöhten Konzentration eines Vernetzungssystems am Wulstkern,
   wobei das Reifenwulstbauteil ein Depot für ein Vernetzungssystem bildet,
d) Zwischenlagerung des vorkonfektionierten Wulstkern-Verbundes,
   wobei ein Teil des Vernetzungssystems vom Reifenwulstbauteil in die Gummierung der äußeren Stahlcorddrähte des Wulstkernes diffundiert,
e) Applizierung des vorkonfektionierten Wulstkern-Verbundes an einer Reifenaufbautrommel zur Herstellung eines Reifenrohlings,
f) Vulkanisation des Reifenrohlings mit einem Vulkanisationsverfahren,
   wobei die Gummierung im inneren Bereich des Wulstkernes im Wesentlichen keine Materialvernetzung aufweist und
   wobei der äußere Randbereich des Wulstkernes durch die Vulkanisation und eine dadurch erzeugte Materialvernetzung mit den anliegenden Reifenwulstbauteilen verbunden ist.

Ein Vorteil des Verfahrens ist insbesondere darin zu sehen, dass durch das besondere Herstellungsverfahren die Biegesteifigkeit des Wulstkernes und des Reifenwulstes gegenüber herkömmlichen Fahrzeugreifen deutlich reduziert wird.
Durch das besondere Herstellungsverfahren wird ein Reifenwulst erzielt, bei dem die einzelnen Stahlcorddrähte sich relativ zueinander bewegen können. Insbesondere durch die Zwischenlagerung des vorkonfektionierten Wulstkernverbandes kann ein Teil des Vernetzungssystems vom Reifenwulstbauteil in die Gummierung der äußeren Stahlcorddrähte des Wulstkernes diffundieren. Auf diese Weise erfolgt bei der Reifenvulkanisation eine Materialvernetzung des äußeren Randbereiches des Wulstkernes mit den anliegenden Reifenwulstbauteilen.

Durch die reduzierte Biegesteifigkeit lässt sich der Fahrzeugreifen einfacher auf die Fahrzeugfelge montieren. Das gleiche gilt für die Demontage des Fahrzeugreifens von der Fahrzeugfelge. Durch die bessere Montagefähigkeit des Fahrzeugreifens wird die Gefahr reduziert, dass der Reifenwulst bei der Montage oder Demontage beschädigt wird. Die reduzierte Biegesteifigkeit ist insbesondere darauf zurückzuführen, dass die einzelnen Stahlcorddrähte im inneren Bereich des Wulstkernes in Umfangsrichtung gegeneinander beweglich ausgebildet sind. Bei der Gummierung der Stahlcorddrähte ist jegliches Vulkanisationsmittel weggelassen worden, so dass die Gummierung auch nach der Reifenvulkanisation des Fahrzeugreifens in einem unvernetzten Zustand verbleibt. Dadurch können sich die Stahlcorddrähte im Inneren des Wulstkernes gegeneinander verschieben, wodurch die deutlich reduzierte Biegesteifigkeit bei der Montage des Fahrzeugreifens auf die Fahrzeugfelge zustande kommt. Der äußere Randbereich des Wulstkernes ist hingegen durch eine vernetzte bzw. vulkanisierte Gummimischung mit den anliegenden Reifenwulstbauteilen fest verbunden. Dadurch wird eine sichere Verbindung des Wulstkernes zu den umliegenden Wulstbauteilen sichergestellt.

In einer vorteilhaften Weiterbildung der Erfindung ist vorgesehen, dass bei Schritt d) eine kontrollierte Diffusion des Vernetzungssystems in die Gummierung des äußeren Bereiches des Wulstkernes erfolgt,
wobei eine kontrollierte Zeit- und Temperatureinwirkung für den Diffusionsvorgang vorgegeben wird.
Durch die kontrollierte Zeit- und Temperatureinwirkung für den Diffusionsvorgang kann die Festigkeit der Verbindung zwischen Reifenwulst und anliegenden Reifenbauteilen gezielt eingestellt werden.

In einer vorteilhaften Weiterbildung der Erfindung ist vorgesehen, dass bei Schritt d) eine kontrollierte Temperatureinwirkung in einem Bereich zwischen 40 und 80 °C erfolgt.
Bei diesen Temperaturbedingungen werden optimale Bedingungen für den Diffusionsvorgang geschaffen.

In einer weiteren vorteilhaften Weiterbildung der Erfindung ist vorgesehen, dass der Gummimischung der Gummierung der Stahlcorddrähte des Wulstkernes ein schnell diffundierender Bestandteil für ein Vernetzungssystem in Form von Schwefel fehlt, wodurch die Gummimischung der Gummierung im Wesentlichen unvernetzt bleibt. Durch das Weglassen des schnell defundierenden Bestandteils für ein Vernetzungssystem wird sichergestellt, dass die Gummierung des Stahlcorddrahtes in einem unvernetzten Zustand bleibt.

In einer weiteren vorteilhaften Weiterbildung der Erfindung ist vorgesehen, dass der Gummimischung der Gummierung der Stahlcorddrähte des Wulstkernes ein zusätzliches Harznetzwerk fehlt.
Das zusätzliche Harznetzwerk ist im Allgemeinen dafür gedacht, die Vulkanisationseigenschaften der Gummierung zu verbessern. Durch Weglassen des zusätzlichen Harznetzwerkes wird sichergestellt, dass sich in der Gummierung keine entsprechende Vernetzung ausbildet. Dadurch wird eine hohe Beweglichkeit der Stahlcorddrähte im inneren Bereich des Wulstkernes sichergestellt.

In einer weiteren vorteilhaften Weiterbildung der Erfindung ist vorgesehen, dass das anliegende Reifenbauteil mit dem Depot für ein Vernetzungssystem eine Kernfahne ist, wobei die Kernfahne um den Wulstkern herumgeschlagen ist und auf beiden Seiten des Kernprofiles anliegt.
Die Kernfahne wird im Allgemeinen bei der Vorkonfektionierung des Wulstkernverbandes aus Wulstkern- und Kernreiter appliziert. Bei der Lagerung des Wulstkernverbandes kann eine ausreichende Menge an Vernetzungssystem in die Gummierung der äußeren Stahlcorddrähte des Wulstkernes eindringen.

In einer weiteren vorteilhaften Weiterbildung der Erfindung ist vorgesehen, dass das anliegende Reifenbauteil mit dem Depot für ein Vernetzungssystem eine zusätzliche Gummischicht ist, wobei die zusätzliche Gummischicht bei einer Vorkonfektionierung des Wulstkernverbundes auf die Kernfahne aufkalandriert wird. Eine entsprechende Gummischicht lässt sich relativ einfach auf der Kernfahne applizieren.

In einer weiteren vorteilhaften Weiterbildung der Erfindung ist vorgesehen, dass der Wulstkern über seinen Umfang mindestens eine Drahtkernklemmung aufweist, wobei die Drahtkernklemmung die geometrische Stabilität des Wulstkernes sicherstellt.
Auf diese Weise wird eine ausreichende Umfangs- und Torsionssteifigkeit des Reifenwulstes gewährleistet.

In einer weiteren vorteilhaften Weiterbildung der Erfindung ist vorgesehen, dass der Wulstkern über seinen Umfang 5 bis 15 einzelne Drahtkernklemmungen aufweist. Bei dieser Anzahl von Drahtklemmungen wird eine optimale geometrische Stabilität des Wulstkernes bzw. Reifenwulstes sichergestellt.

In einer weiteren vorteilhaften Weiterbildung der Erfindung ist vorgesehen, dass die Drahtkernklemmungen jeweils eine Drahtwicklung ohne eine Gummierung sind. Dadurch wird mit den Drahtklemmungen eine bessere Fixierung an dem Wulstkern erzielt.

In einer weiteren vorteilhaften Weiterbildung der Erfindung ist vorgesehen, dass der Fahrzeugluftreifen ein Nutzfahrzeugreifen ist, wobei der Nutzfahrzeugreifen für eine Runderneuerung vorgesehen ist.
Bei diesen Nutzfahrzeugreifen wird der Reifen mehrmals von der Fahrzeugfelge demontiert und wieder auf die Fahrzeugfelge montiert. Daher muss auch bei älteren

Fahrzeugreifen eine gute Montierbarkeit gewährleistet werden, wobei der Reifenwulst nicht beschädigt werden darf.

In einer weiteren vorteilhaften Weiterbildung der Erfindung ist vorgesehen, dass der Fahrzeugluftreifen ein Niederquerschnittsreifen für einen PKW-Reifen ist.
Bei Niederquerschnittsreifen für PKW-Reifen muss der Reifenwulst eine reduzierte Biegesteifigkeit besitzen, um eine gute Montierbarkeit des Fahrzeugreifens auf die Felge gewährleisten zu können.

Anhand eines Ausführungsbeispieles soll die Erfindung näher erläutert werden. Es zeigt:

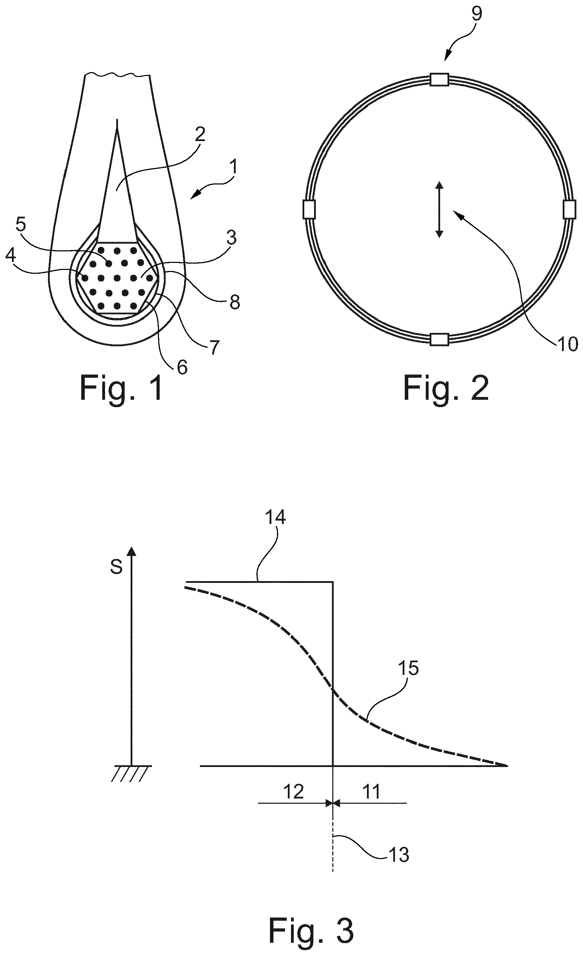

- Fig. 1:: einen Reifenwulst.

Die Figur 1 zeigt schematisch den Reifenwulst 1 des erfindungsgemäßen Fahrzeugluftreifens mit dem Kernprofil 2. Es handelt sich bei dieser Figur um eine Radialschnittansicht des Fahrzeugluftreifens, bei der das Kernprofil 2 und der Kern 3 als Querschnittsprofil dargestellt sind.
Der Wulstkern 3 besteht in der Querschnittsansicht aus einzelnen Stahlcorddrähten 4 und 5. Bei der Vorkonfektionierung des Wulstkernes 3 wird im Allgemeinen ein einzelner Stahlcorddraht in mehreren Windungen aufgewickelt, wobei der Stahlcorddraht mit einer Gummierung versehen ist. Ein besonderes Merkmal vom Wulstkern 3 ist, dass die Gummierung des Stahlcorddrahtes vom Wulstkern 3 keinerlei Vulkanisationsmittel oder ein anderes Vernetzungssystem aufweist. Ein zusätzliches Harznetzwerk wird bei der Gummierung der Stahlcorddrähte ebenfalls weggelassen, wie es ansonsten bei herkömmlichen Fahrzeugreifen der Fall ist. Durch das Weglassen des Vernetzungssystems in der Gummierung der Stahlcorddrähte können sich die inneren Stahlcorddrähte 5 im inneren Bereich des Wulstkernes gegeneinander in Umfangsrichtung des Fahrzeugreifens bewegen. Auf diese Weise wird die Biegesteifigkeit in radialer Richtung des Fahrzeugreifens erheblich reduziert. Der Reifenwulst kann bei der Montage des Fahrzeugreifens leichter in eine elliptische Form gebracht werden, um den Reifenwulst über das Felgenhorn des Fahrzeugreifens zu heben. Der äußere Randbereich 6 des Wulstkerns weist hingegen eine feste Verbindung zu den umliegenden Wulstbauteilen auf. Im äußeren Randbereich 6 des Wulstkernes liegt eine vernetzte bzw. vulkanisierte Gummierung vor, die die Verbindung zu den anliegenden Wulstbauteilen sicherstellt. Um den Wulstkern 3 ist eine Kernfahne 8 herumgeschlagen, die bei der Vorkonfektionierung des Wulstkernverbandes ein Depot für ein Vernetzungssystem besitzt. Die erhöhte Konzentration am Vernetzungssystem in der Kernfahne führt zu einer entsprechenden Diffusion des Vernetzungssystems in die Gummierung der außen liegenden Stahlcorddrähte 4 im äußeren Bereich des Wulstkernes 3. Dadurch bildet sich bei der Reifenvulkanisation eine vernetzte Gummierung im äußeren Bereich des Wulstkernes 3 aus. Bei einem weiteren Ausführungsbeispiel ist auf die Kernfahne 8 eine Gummischicht 7 aufkalandriert. Diese optionale Gummischicht 7 ist bei der Vorkonfektionierung des Wulstkernverbandes mit einem entsprechenden Depot für ein Vernetzungssystem versehen. Das Vernetzungssystem in der Gummischicht diffundiert in die Gummierung der äußeren Stahlcorddrähte 4 im äußeren Bereich des Wulstkernes 3. Auf diese Weise wird eine sichere Anbindung des Wulstkernes 3 zu den anliegenden Wulstbauteilen sichergestellt.
Bei der Vorkonfektionierung des Wulstkernverbandes, welcher aus dem Wulstkern 3, dem Kernprofil 2 und den anliegenden Wulstbauteilen 8 und/oder 7 besteht, erfolgt eine Zwischenlagerung, um einen optimalen Diffusionsvorgang für das Vernetzungssystem zu erzielen. Diese Zwischenlagerung kann beispielsweise in einer temperierten Kammer erfolgen, bei dem der Wulstkernverbund über eine vorgegebene Zeit in einem Temperaturbereich zwischen 40 und 80 °C temperiert wird. Auf diese Weise kann ein Teil des Vernetzungssystems in die Gummierung der äußeren Stahlcorddrähte 4 diffundieren. Durch die anschließende Reifenvulkanisation wird anschließend eine Materialvernetzung des äußeren Randbereiches des Wulstkernes 3 mit den anliegenden Wulstbauteilen erreicht.

Die Figur 2 zeigt den vorkonfektionierten Wulstkern 3 in einer Seitenansicht. An einzelnen Stellen wird der Wulstkern 3 mit einer Drahtklemmung 9 versehen, um die geometrische Stabilität des Wulstkernes zu verbessern. Der Wulstkern 3 sollte vorzugsweise mit 5 bis 15 Drahtklemmungen versehen werden, die gleichmäßig über den Umfang des Wulstkernes 3 verteilt sein sollten.
Die radiale Richtung 10 zeigt die Richtung in der die Biegesteifigkeit des Wulstkernes durch die neue Wulstkonstruktion wesentlich reduziert wird.

Die Figur 3 zeigt die Konzentration des Vernetzungssystems in den beiden angrenzenden Bauteilen, wobei die Gummierung 11 der Stahlcorddrähte des Wulstkernes auf der rechten Seite liegen. Auf der linken Seite befindet sich die Gummierung 12 der Kernfahne oder der zusätzlichen Gummischicht. Der stufenförmige Verlauf 14 zeigt den Konzentrationsverlauf des Vernetzungssystems bei der Vorkonfektionierung des Wulstkernverbundes mit den anliegenden Wulstbauteilen. Zu Beginn des Diffusionsvorganges ist die Schwefelkonzentration in der Gummierung 11 im Wesentlichen gleich Null. Die gestrichelte Kurve 15 zeigt den Konzentrationsverlauf des Vernetzungssystems nach dem Diffusionsvorgang. Aufgrund des Diffusionsvorganges ergibt sich ein S-förmiger Kurvenverlauf. Ein Teil des Vernetzungssystems in Form von Schwefel ist in das angrenzende Bauteil diffundiert.

### Bezugszeichenliste (ist Teil der Beschreibung)

- 1: Reifenwulst
- 2: Kernprofil
- 3: Kern
- 4: Einzelner Stahlcorddraht im äußeren Bereich des Wulstkernes
- 5: Einzelner Stahlcorddraht im inneren Bereich des Wulstkernes
- 6: Äußerer Randbereich des Wulstkernes
- 7: Optionale auf Kernfahne aufkalandrierte Gummischicht mit Depot für Vernetzungssystem
- 8: Kernfahne mit Depot für Vernetzungssystem
- 9: Drahtklemmung
- 10: Radiale Richtung des Fahrzeugreifens
- 11: Gummierung der Stahlcorddrähte des Wulstkernes
- 12: Gummierung der Kernfahne oder zusätzlichen Gummischicht
- 13: Bauteilgrenze zwischen Gummierung der Stahlcorddrähte und Kernfahne
- 14: Konzentrationsverlauf des Vernetzungssystems (Schwefel) bei der Vorkonfektionierung des Wulstkern-Verbundes mit den anliegenden Wulstbauteilen
- 15: Konzentrationsverlauf des Vernetzungssystems (Schwefel) nach dem Diffusionsvorgang (nach der Vorkonfektionierung)

## Patentansprüche

1. Verfahren zur Herstellung eines Fahrzeugluftreifen mit einer reduzierten Biegesteifigkeit des Wulstkernes (3) und des Reifenwulstes (1) mit folgenden Schritten:
a) Vorkonfektionierung eines Wulstkernes (3) mit einem Stahlcorddraht (4, 5), wobei der Stahlcorddraht (4, 5) eine äußere Gummierung ohne ein Vulkanisationsmittel oder einem Vernetzungssystem für die Gummierung aufweist und
wobei der Stahlcorddraht (4, 5) in mehreren Windungen in Umfangsrichtung des Wulstkernes (3) aufgewickelt wird,
b) Applizierung eines Kernprofiles (2) am Wulstkern (3),
wobei das Kernprofil (2) auf der äußeren Seite des Wulstkernes (3) in Umfangsrichtung angeordnet wird,
c) Applizierung eines Reifenwulstbauteils (7, 8) mit einer erhöhten Konzentration eines Vernetzungssystems am Wulstkern (3),
wobei das Reifenwulstbauteil (7, 8) ein Depot für ein Vernetzungssystem bildet,
d) Zwischenlagerung des vorkonfektionierten Wulstkern-Verbundes, wobei ein Teil des Vernetzungssystems vom Reifenwulstbauteil (7, 8) in die Gummierung der äußeren Stahlcorddrähte (4) des Wulstkernes (3) diffundiert,
e) Applizierung des vorkonfektionierten Wulstkern-Verbundes an einer Reifenaufbautrommel zur Herstellung eines Reifenrohlings,
f) Vulkanisation des Reifenrohlings mit einem Vulkanisationsverfahren, wobei die Gummierung im inneren Bereich des Wulstkernes (3) im Wesentlichen keine Materialvernetzung aufweist und
wobei der äußere Randbereich des Wulstkernes (3) durch die Vulkanisation und eine dadurch erzeugte Materialvernetzung mit den anliegenden Reifenwulstbauteilen (7, 8) verbunden ist.

2. Verfahren nach Anspruch 1,
**dadurch gekennzeichnet, dass**
bei Schritt d) eine kontrollierte Diffusion des Vernetzungssystems in die Gummierung des äußeren Bereiches des Wulstkernes (3) erfolgt,
wobei eine kontrollierte Zeit- und Temperatureinwirkung für den Diffusionsvorgang vorgegeben wird.

3. Verfahren nach einem der vorhergehenden Ansprüche,
**dadurch gekennzeichnet, dass**
bei Schritt d) eine kontrollierte Temperatureinwirkung in einem Bereich zwischen 40 und 80 °C erfolgt.

4. Verfahren nach einem der vorhergehenden Ansprüche,
**dadurch gekennzeichnet, dass**
bei Schritt a) der Gummimischung der Gummierung der Stahlcorddrähte (4, 5) des Wulstkernes (3) ein schnell diffundierender Bestandteil eines Vernetzungssystems in Form von Schwefel fehlt.

5. Verfahren nach einem der vorhergehenden Ansprüche,
**dadurch gekennzeichnet, dass**
bei Schritt a) der Gummimischung der Gummierung der Stahlcorddrähte (4, 5) des Wulstkernes (3) ein zusätzliches Harznetzwerk fehlt.

6. Verfahren nach einem der vorhergehenden Ansprüche,
**dadurch gekennzeichnet, dass**
bei Schritt c) das anliegende Reifenwulstbauteil (8) um den Wulstkern (3) herumgeschlagen wird und die Enden des Reifenwulstbauteil (8) jeweils im unteren Bereich des Kernprofiles (2) enden.

7. Verfahren nach einem der vorhergehenden Ansprüche,
**dadurch gekennzeichnet, dass**
bei Schritt c) das anliegende Reifenwulstbauteil mit dem Depot für ein Vernetzungssystem eine Kernfahne (8) ist,
wobei die Kernfahne (8) um den Wulstkern (3) herumgeschlagen wird und auf beiden Seiten des Kernprofiles (2) anliegt.

8. Verfahren nach einem der vorhergehenden Ansprüche,
**dadurch gekennzeichnet, dass**
bei Schritt c) das anliegende Reifenbauteil mit dem Depot für ein Vernetzungssystem eine zusätzliche Gummischicht (7) ist,
wobei die zusätzliche Gummischicht (7) vor Schritt c) bei einer Vorkonfektionierung auf die Kernfahne (8) aufkalandriert wird.

9. Verfahren nach einem der vorhergehenden Ansprüche,
**dadurch gekennzeichnet, dass**
nach Schritt a) der Wulstkern (3) über seinen Umfang mit mindestens einer Drahtkernklemmung (9) fixiert wird,
wobei die Drahtkernklemmung (9) die geometrische Stabilität des Wulstkernes (3) sicherstellt.

10. Verfahren nach einem der vorhergehenden Ansprüche
**dadurch gekennzeichnet, dass**
nach Schritt a) der Wulstkern (3) über seinen Umfang mit 5 bis 15 einzelnen Drahtkernklemmungen (9) fixiert wird.

11. Verfahren nach einem der vorhergehenden Ansprüche,
**dadurch gekennzeichnet, dass**
mit dem Verfahren ein Nutzfahrzeugreifen hergestellt wird, wobei der Nutzfahrzeugreifen für eine Runderneuerung vorgesehen ist.

12. Verfahren nach einem der vorhergehenden Ansprüche,
**dadurch gekennzeichnet, dass**
mit dem Verfahren ein Niederquerschnittsreifen für einen PKW-Reifen hergestellt wird.

## Claims

1. Method for producing a pneumatic vehicle tyre having a reduced flexural stiffness of the bead core (3) and of the tyre bead (1), comprising the following steps:
a) prefabricating a bead core (3) having a steel cord wire (4, 5), wherein the steel cord wire (4, 5) has an outer rubber coating without a vulcanizing agent or a crosslinking system for the rubber coating and
wherein the steel cord wire (4, 5) is wound up in a number of turns in the circumferential direction of the bead core (3),
b) applying a bead filler (2) to the bead core (3), wherein the bead filler (2) is arranged on the outer side of the bead core (3) in the circumferential direction,
c) applying a tyre bead component (7, 8) having an increased concentration of a crosslinking system to the bead core (3),
wherein the tyre bead component (7, 8) forms a depot for a crosslinking system,
d) intermediately storing the prefabricated bead-core composite, wherein part of the crosslinking system of the tyre bead component (7, 8) diffuses into the rubber coating of the outer steel cord wires (4) of the bead core (3),
e) applying the prefabricated bead-core composite to a tyre-building drum for producing a tyre blank,
f) vulcanizing the tyre blank by a vulcanizing process,
wherein the rubber coating has substantially no material crosslinking in the inner region of the bead core (3) and
wherein the outer peripheral region of the bead core (3) is connected to the adjacent tyre bead components (7, 8) by the vulcanization and a material crosslinking thereby produced.

2. Method according to Claim 1,
**characterized in that**
in step d), a controlled diffusion of the crosslinking system into the rubber coating of the outer region of the bead core (3) takes place,
wherein a controlled effect in terms of time and temperature is prescribed for the diffusion process.

3. Method according to one of the preceding claims,
**characterized in that**
in step d), a controlled effect in terms of temperature takes place in the range between 40 and 80°C.

4. Method according to one of the preceding claims,
**characterized in that**
in step a), the rubber compound of the rubber coating of the steel cord wires (4, 5) of the bead core (3) is without a rapidly diffusing constituent of a crosslinking system in the form of sulphur.

5. Method according to one of the preceding claims,
**characterized in that**
in step a), the rubber compound of the rubber coating of the steel cord wires (4, 5) of the bead core (3) is without an additional resin network.

6. Method according to one of the preceding claims, **characterized in that**
in step c), the adjacent tyre bead component (8) is wrapped around the bead core (3) and the ends of the tyre bead component (8) respectively end in the lower region of the bead filler (2).

7. Method according to one of the preceding claims,
**characterized in that**
in step c), the adjacent tyre bead component with the depot for a crosslinking system is a flipper strip (8),
wherein the flipper strip (8) is wrapped around the bead core (3) and lies adjacent on both sides of the bead filler (2).

8. Method according to one of the preceding claims,
**characterized in that**
in step c), the adjacent tyre component with the depot for a crosslinking system is an additional rubber layer (7),
wherein the additional rubber layer (7) is calendered onto the flipper strip (8) in a prefabricating operation before step c).

9. Method according to one of the preceding claims,
**characterized in that**
after step a), the bead core (3) is fixed over its circumference by at least one wire core clamp (9), wherein the wire core clamp (9) ensures the geometrical stability of the bead core (3).

10. Method according to one of the preceding claims,
**characterized in that**
after step a), the bead core (3) is fixed over its circumference by 5 to 15 individual wire core clamps (9).

11. Method according to one of the preceding claims,
**characterized in that**
the method is used for producing a commercial vehicle tyre,
wherein the commercial vehicle tyre is intended for retreading.

12. Method according to one of the preceding claims,
**characterized in that**
the method is used for producing a low-section tyre for a passenger car tyre.

## Revendications

1. Procédé de production d'un pneumatique de véhicule dont la tringle du talon (3) et le talon du pneumatique (1) présentent une rigidité à la flexion réduite, comprenant les étapes suivantes :
a) préfabrication d'une tringle du talon (3) avec un fil de câble d'acier (4, 5),
le fil de câble d'acier (4, 5) présentant un gommage extérieur sans agent de vulcanisation ou un système de réticulation pour le gommage et
le fil de câble d'acier (4, 5) étant enroulé en plusieurs spires dans la direction circonférentielle de la tringle du talon (3),
b) application d'un profilé de tringle (2) sur la tringle du talon (3),
le profilé de tringle (2) étant disposé sur le côté extérieur de la tringle du talon (3) dans la direction circonférentielle,
c) application d'un composant de talon du pneumatique (7, 8) avec une concentration accrue d'un système de réticulation sur la tringle du talon (3),
le composant de talon du pneumatique (7, 8) formant un dépôt pour un système de réticulation,
d) stockage intermédiaire du composite de talon du pneumatique préfabriqué,
une partie du système de réticulation diffusant à partir du composant de talon du pneumatique (7, 8) dans le gommage des fils de câble d'acier (4) extérieurs de la tringle du talon (3),
e) application du composite de talon du pneumatique préfabriqué sur un tambour de confection de pneumatique pour la fabrication d'une ébauche de pneumatique,
f) vulcanisation de l'ébauche de pneumatique avec un procédé de vulcanisation,
le gommage ne présentant, dans la zone intérieure de la tringle du talon (3), essentiellement pas de réticulation de matériau, et
la zone de bord extérieure de la tringle du talon (3) étant raccordée aux composants de talon du pneumatique (7, 8) adjacents par la vulcanisation et par une réticulation de matériau ainsi produite.

2. Procédé selon la revendication 1,
**caractérisé en ce que**,
dans l'étape d), une diffusion contrôlée du système de réticulation dans le gommage de la zone extérieure de la tringle du talon (3) est effectuée,
une action temporelle et thermique contrôlée étant prédéfinie pour le processus de diffusion.

3. Procédé selon l'une des revendications précédentes,
**caractérisé en ce que**,
dans l'étape d), une action thermique contrôlée est effectuée dans une plage entre 40 et 80 °C.

4. Procédé selon l'une des revendications précédentes,
**caractérisé en ce que**,
dans l'étape a), au composé de caoutchouc du gommage des fils de câble d'acier (4, 5) de la tringle du talon (3), il manque un composant à diffusion rapide d'un système de réticulation sous la forme de soufre.

5. Procédé selon l'une des revendications précédentes,
**caractérisé en ce que**,
dans l'étape a), au composé de caoutchouc du gommage des fils de câble d'acier (4, 5) de la tringle du talon (3), il manque un réseau de résine supplémentaire.

6. Procédé selon l'une des revendications précédentes,
**caractérisé en ce que**,
dans l'étape c), le composant de talon du pneumatique (8) adjacent est entouré autour de la tringle du talon (3), et les extrémités du composant de talon du pneumatique (8) se terminent respectivement dans la zone inférieure du profilé de tringle (2).

7. Procédé selon l'une des revendications précédentes,
**caractérisé en ce que**,
dans l'étape c), le composant de talon du pneumatique adjacent avec le dépôt pour un système de réticulation est un bourrage de tringle (8),
le bourrage de tringle (8) étant entouré autour de la tringle du talon (3) et reposant sur les deux côtés du profilé de tringle (2).

8. Procédé selon l'une des revendications précédentes,
**caractérisé en ce que**,
dans l'étape c), le composant de pneumatique adjacent avec le dépôt pour un système de réticulation est une couche de caoutchouc (7) supplémentaire, la couche de caoutchouc (7) supplémentaire étant laminée à la calandre sur le bourrage de tringle (8) avant l'étape c) lors d'une préfabrication.

9. Procédé selon l'une des revendications précédentes,
**caractérisé en ce que**,
après l'étape a), la tringle du talon (3) est fixée sur sa circonférence avec au moins un serrage par noyau de câble (9),
le serrage par noyau de câble (9) assurant la stabilité géométrique de la tringle du talon (3).

10. Procédé selon l'une des revendications précédentes,
**caractérisé en ce que**,
après l'étape a), la tringle du talon (3) est fixée sur sa circonférence avec 5 à 15 serrages par noyau de câble (9) individuels.

11. Procédé selon l'une des revendications précédentes,
**caractérisé en ce**
**qu'**un pneumatique de véhicule est fabriqué avec le procédé,
le pneumatique de véhicule étant prévu pour un rechapage.

12. Procédé selon l'une des revendications précédentes,
**caractérisé en ce**
**qu'**un pneumatique taille basse pour un pneumatique de véhicule de tourisme est fabriqué avec le procédé.
